# EUROPÄISCHE PATENTSCHRIFT

(11) **EP 1 988 302 B1**
(45) Veröffentlichungstag und Bekanntmachung des Hinweises auf die Patenterteilung: **24.10.2012**
(21) Anmeldenummer: 08014819.0
(22) Anmeldetag: 21.04.2008
(51) Int. Cl.: F16D 21/06, F16D 13/58, F16D 25/10, F16D 25/08, F16D 13/75

(54) **Doppelkupplung**
Double clutch
Embrayage double

(30) Priorität: 25.04.2007 DE 102007019499
(43) Veröffentlichungstag der Anmeldung: 05.11.2008
(62) Teilanmeldung aus: 08007688.8
(73) Patentinhaber: Schaeffler Technologies AG & Co. KG, 91074 Herzogenaurach (DE)
(72) Erfinder: Reimnitz, Dirk, 77815 Bühl (DE)

(56) Entgegenhaltungen:
- EP-A- 1 134 447
- EP-A- 1 361 102
- EP-A- 1 681 481
- FR-A- 2 861 147

## Beschreibung

Die Erfindung betrifft eine Doppelkupplung mit den Merkmalen des Oberbegriffs des Patentanspruches 1. Eine solche Doppelkupplung ist aus EP-A-1 681 481 bekannt.

Zur Lagerung der Kupplung gibt es verschiedene Möglichkeiten. So wird in der DD-PS 37 437 eine Lagerung für eine Doppelkupplung, insbesondere für Traktoren beschrieben, bei der die ständig umlaufenden Teile der Kupplung sowohl motorseitig als auch getriebeseitig in einem Kupplungsgehäuse gelagert sind, wobei die Lagerung des getriebeseitigen Kupplungsdeckels auf einer Gleithülse erfolgt. In der DE 38 19 702 A1 wird eine hydraulisch betätigte Doppelkupplung beschrieben, bei der eine Seite des Kupplungsgehäuses mit einer Steckverzahnung Drehmoment übertragend mit der Ausgangswelle des Antriebes verbunden ist.

Die Aufgabe der Erfindung besteht darin, eine montagefreundliche Doppelkupplung mit einer einwandfreien Lagerung bei kürzester Baulänge zu schaffen.

Diese Aufgabe wird erfindungsgemäß gelöst durch eine Doppelkupplung mit den Merkmalen des Patentanspruches 1.

Die Erfindung ist insbesondere anwendbar bei einer Doppelkupplung bestehend aus zwei mit Kupplungsdeckeln versehenen Teilkupplungen gebildet, die mit einem Antrieb eines Kraftfahrzeuges verbunden ist, dessen Drehmoment
über mindestens eine dieser Teilkupplungen über eine Getriebeeingangswelle auf ein Getriebe übertragen wird. Zwischen dem Antrieb und der Doppelkupplung ist dabei ein Dämpfer zur Dämpfung der von der Kurbelwelle herrührenden Schwingungen angeordnet. Für diese Doppelkupplung wird vorzugsweise für die eine Teilkupplung eine aufgedrückte Kupplung mit Verschleißnachstellung und für die andere Teilkupplung eine zugedrückte Kupplung verwendet. Beide Teilkupplungen werden mittels Betätigungseinrichtungen betätigt, wobei deren Betätigungslager mit Betätigungshebeln der Teilkupplungen in Wirkverbindung stehen. Die Lagerung der Doppelkupplung wird aus einem Fest- und einem Loslager gebildet. Dabei wird das Loslager durch eine Steckverzahnung des antriebsseitigen Kupplungsdeckels mit dem Ausgangsteil des Dämpfers und das Festlager durch ein im getriebeseitigen Kupplungsdeckel angeordnetes Lager gebildet, das sich auf dem Gehäuse einer konzentrisch um die Getriebeeingangswelle angeordneten Betätigungseinrichtung abstützt.

Mit dieser Lösung wird eine exakte Lagerung der Doppelkupplung gewährleistet und dadurch dass die Betätigungseinrichtungen, zumindest teilweise, mit in die Kupplungsglocke integriert werden, der Bauraum für die Doppelkupplung erheblich verkürzt.

Erfindungsgemäß ist zwischen dem Gehäuse der Betätigungseinrichtung und dem Festlager ein mit einer Lagerschale dieses Festlagers verbundener Verbindungsflansch angeordnet, über den eine Verbindung zum Getriebe herstellbar ist. Auf diese Weise wird die Betätigungseinrichtung der einen Teilkupplung mit in die Kupplungsglocke integriert.

Für die Verbindung des Verbindungsflansches mit dem Getriebe können montagegünstig Schraubverbindungen vorgesehen sein. Allerdings kann dieser Verbindungsflansch auch so ausgeführt werden, dass er mit entsprechenden Elementen des Getriebegehäuses verschnappt bzw. in diese einrastet.

Zur Einsparung von Bauraum und zusätzlichen Kosten sieht die Erfindung vor, dass der Verbindungsflansch oder das Gehäuse der Betätigungseinrichtung mit einer integrierten Lagerlaufbahn für das Festlager versehen ist.

In Vorteilhafter Weise ist die Betätigungsstange als Rohr ausgebildet und gegenüber dem Getriebe fixiert.

Gemäß einem weiteren bevorzugten Ausführungsbeispiel wird die Doppelkupplung aus zwei mit Kupplungsdeckeln versehenen Teilkupplungen gebildet, die mit einem Antrieb eines Kraftfahrzeuges verbunden ist. Dabei ist jede Teilkupplung mit einem Betätigungshebel wirkverbunden. Mindestens eine der Teilkupplungen weist in vorteilhafter Weise eine Verschleißnachstellung auf, die aus einer mit der Teilkupplung in Wirkverbindung stehenden Sensorfeder gebildet wird. Diese Sensorfeder ist zwischen dem Kupplungsdeckel und dem Betätigungshebel für die dem Kupplungsdeckel am nächsten liegende Teilkupplung angeordnet und stützt sich direkt oder indirekt am Kupplungsdeckel ab.

Eine vorteilhafte Ausgestaltung der Erfindung sieht vor, die Sensorfeder mittels eines Bajonettverschlusses mit dem Betätigungshebel zu verbinden.

Außerdem ist es besonders vorteilhaft für die Montage, mindestens ein Ende des Verbindungselementes mit einer Bajonettverbindungsmöglichkeit zu versehen.

Weitere Vorteile, Merkmale und Einzelheiten der Erfindung ergeben sich aus der nachfolgenden Beschreibung eines anhand von Zeichnungen näher erläuterten Ausführungsbeispiels. Es zeigen:
- Fig. 1:: eine Variante einer Doppelkupplung, bei der ein Teil einer Betätigungseinrichtung einer Teilkupplung in der Kupplungsglocke angeordnet ist
- Fig. 2:: eine weitere Variante einer Doppelkupplung, bei der die Betätigungseinrichtungen beider Teilkupplungen komplett in der Kupplungsglocke untergebracht sind.

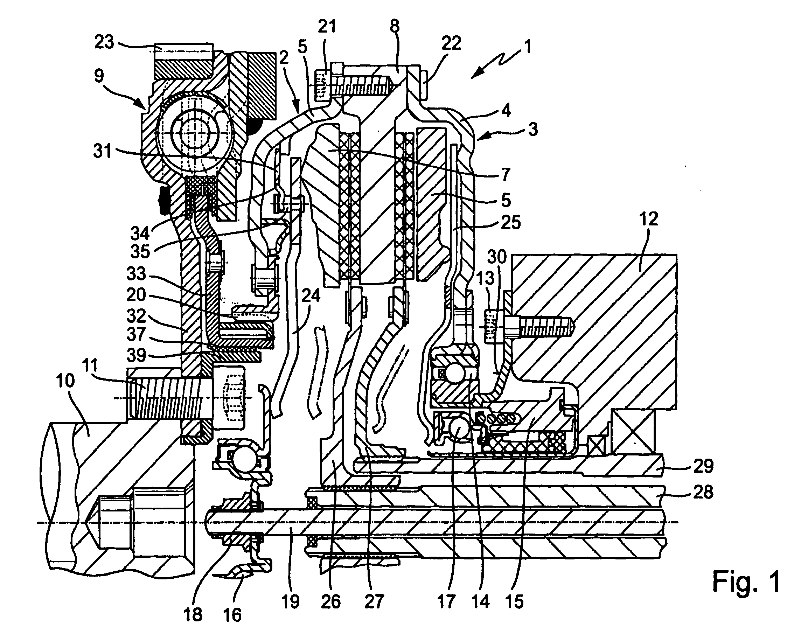

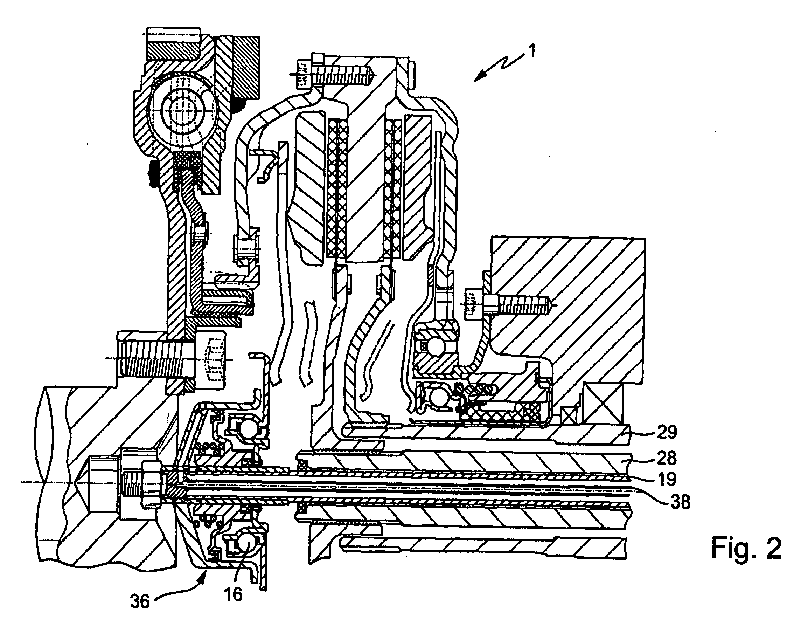

In den Figuren 1 und 2 ist jeweils ein Teil eines Antriebsstrangs eines Kraftfahrzeugs im Halbschnitt dargestellt. Die den Figuren 1 und 2 zu entnehmenden Antriebsstränge ähneln einander. Zur Bezeichnung gleicher Bauteile werden daher gleiche Bezugszeichen verwendet.

Zwischen einer nicht dargestellten Antriebseinheit, insbesondere einer Brennkraftmaschine, von der eine Kurbelwelle 10 ausgeht, und einem Getriebe 12 ist eine Doppelkupplung 1 angeordnet, die aus zwei Teilkupplungen 2, 3 besteht. Für die eine Teilkupplung 3 wird eine zugedrückte Kupplung verwendet, die in diesem Beispiel ohne Verschleißnachstellung ausgerüstet ist. Für die andere Teilkupplung 2 wird eine aufgedrückte Kupplung mit kraftgesteuerter Verschleißnachstellung 31 gewählt. Durch die Verwendung einer Teilkupplung 3 ohne Verschleißnachstellung wird axialer Bauraum eingespart. Weiter kann durch die in der aufgedrückten Kupplung vorgesehene Verschleißnachstellung 31 auf eine Parksperre auf der Getriebeseite verzichtet werden. Allerdings ist durch eine softwaregestützte Sicherheitsstrategie sicher zu stellen, dass im Schadensfall beide Teilkupplungen 2, 3 nicht gleichzeitig geschlossen werden.

Alternativ lässt sich die Doppelkupplung 1 auch aus Teilkupplungen 2, 3 aufbauen, die die gleiche Betätigungsrichtung aufweisen. Dies ist z.B. bei der Kombination einer aufgezogenen und einer zugedrückten Kupplung der Fall. Wenn aus Sicherheitsgründen zwei selbstöffnende Teilkupplungen eingesetzt werden müssen, können auch zwei zugedrückte, eine zugedrückte und eine zugezogene oder zwei zugezogene Kupplungen verwendet werden.

Wie aus den Figuren 1 und 2 ersichtlich, sind beide Teilkupplungen 2, 3 jeweils auf einer Seite einer zentralen Schwungmasse 8 angeordnet, die gleichzeitig als Zwischendruckplatte fungiert, so dass sich die Druckplatten 6, 7 beider Teilkupplungen 2, 3 gegenüberstehen.

Bei beiden Figuren ist zwischen der Antriebseinheit und der Doppelkupplung 1 ein externer Dämpfer 9 angeordnet. Die Kurbelwelle 10 der Brennkraftmaschine ist über Schraubverbindungen 11 fest mit einem Eingangsteil 32 des Dämpfers 9 verbunden. Das Eingangsteil 32 des Dämpfers 9 hat im Wesentlichen die Gestalt einer sich in radialer Richtung erstreckenden Kreisringscheibe, die radial außen einen Schwingungsdämpferkäfig bildet. Radial außen ist an dem Eingangsteil 32 ein Anlasserzahnkranz 23 aufgebracht. In dem Schwingungsdämpferkäfig ist mindestens eine Energiespeichereinrichtung, insbesondere eine Federeinrichtung, zumindest teilweise aufgenommen. In diese Federeinrichtung greift ein Ausgangsteil 33 des Dämpfers 9 ein.

Radial innen ist das Ausgangsteil 33 des Dämpfers 9 durch eine Steckverzahnung 20 lösbar mit einem Kupplungsdeckel 5 verbunden. Zwischen diesem Kupplungsdeckel 5 und einer mit der Druckplatte 7 in Wirkverbindung stehenden Tellerfeder 24 ist eine Sensorfeder 34 angeordnet. Diese Sensorfeder 34 ist zur Realisierung der an dieser Teilkupplung 2 vorgesehenen Verschleißnachstellung 31 mittels einer geeigneten Verbindung mit der Tellerfeder 24 zu verbinden. Die Verbindung kann dabei, wie in diesem Beispiel, mittels mehrerer über den Umfang verteilt angeordneter Verbindungselemente 35 erfolgen. Da über diese Verbindung Zugkräfte übertragen werden, ist diese Verbindung auch beispielsweise über eine Bajonettverbindung mit Zughaken herstellbar. Diese Zughaken können dabei aus dem Material der miteinander zu verbindenden Bauteile herausgearbeitet sein. Ebenfalls können diese auch zusätzlich an den Bauteilen angebracht werden. Zur Erleichterung der Montage können die Enden dieser Verbindungselemente 35 eine Bajonettverbindungsmöglichkeit aufweisen. Ebenso gut kann diese Verbindung auch durch mindestens einen mit der Sensorfeder 34 oder der Tellerfeder 24 vernieteten Stufenbolzen 35 oder Flachniet realisiert werden.

Die Verbindungselemente 35 können jedoch auch so gestaltet sein, dass sie flächig ausgeführt sind, so dass mindestens zwei miteinander verbunden sind. Die so ausgeführten Verbindungselemente 35 sind dann mit mehreren Verbindungsstellen zur,Seite der Tellerfeder oder auch noch zur Sensorfeder hin versehen. Zur Senkung der Herstellungskosten sind die Verbindungselemente 35 aus Blech als Stanz- bzw. Stanzbiegeteil oder als Drahtbiegeteil gefertigt.

An diesem Kupplungsdeckel 5 ist mit Hilfe von Schraubverbindungen 21 die Zwischendruckplatte 8 der Doppelkupplung 1 befestigt. Antriebsseitig sind zwischen der Druckplatte 7 und der Zwischendruckplatte 8 Reibbeläge einer ersten Kupplungsscheibe 26 einklemmbar. Diese erste Kupplungsscheibe26 ist über ein Nabenteil drehfest mit einer ersten Getriebeeingangswelle 28 verbunden, die als Hohlwelle ausgeführt ist. Die erste Getriebeeingangswelle 28 ist drehbar in einer zweiten, ebenfalls als Hohlwelle ausgebildeten Getriebeeingangswelle 29 angeordnet. Ein Nabenteil einer zweiten Kupplungsscheibe 27 ist drehfest mit dem antriebsseitigen Ende der zweiten Getriebeeingangswelle 29 verbunden. An der zweiten Kupplungsscheibe 27 sind radial außen Reibbeläge befestigt, die zwischen der Zwischendruckplatte 8 und der Druckplatte 6 einklemmbar sind. An der Zwischendruckplatte 8 ist ebenfalls mittels Schraubverbindungen 22 ein Kupplungsdeckel 4 befestigt. Die erste Getriebeeingangswelle 28 wird bei Verwendung dieser Art von Teilkupplungen 2, 3 von einer Zugstange 19 durchzogen, so dass diese im Zentrum beider Getriebeeingangswellen 28, 29 gelagert ist.

Durch eine ein Loslager 20 bildende Steckverzahnung ist der Kupplungsdeckel 5 unter Zwischenschaltung des externen Dämpfers 9 drehfest mit der Kurbelwelle 10 verbunden. Die Doppelkupplung 1 wird über Betätigungseinrichtungen mit Betätigungslagern 16, 17 betätigt. Diese Betätigungslager 16, 17 wirken wiederum mit Betätigungshebeln 24, 25 beziehungsweise Betätigungseinrichtungen, wie die dargestellte Betätigungseinrichtung 15 zusammen. Bei den Betätigungshebeln 24, 25 handelt es sich einerseits um eine Tellerfeder 24 und andererseits um eine Hebelfeder 25. Mittels dieser sind die beiden Druckplatten 6, 7 in axialer Richtung relativ zur Zwischendruckplatte 8 begrenzt verlagerbar. Die mit den Betätigungseinrichtungen in Wirkverbindung stehenden Betätigungslager 16, 17 werden hydraulisch mit Druck beaufschlagt. Die Zugstange 19 dient hierbei zur Betätigung des Betätigungslagers 16, das auf dieser endseitig angeordnet ist. Diese Zugstange 19 wird mittels einer außerhalb der Kupplungsglocke angeordneten Betätigungseinrichtung, die vorzugsweise aus einem Hydraulikzylinder besteht, mit Druck beaufschlagt, so dass diese axial bewegbar ist. Dies spart Bauraum in der Kupplungsglocke und erleichtert die hydraulische Entlüftung des extern angeordneten Hydraulikzylinders. Das Ende dieser Zugstange 19 ist mit einem Gewinde versehen, so dass mittels einer Mutter 18 das Betätigungslager 16 auf dieser fixiert werden kann. Über einen in radialer Richtung entsprechend ausgebildeten Fortsatz des Lageraußenringes steht das Betätigungslager 16 mit der Tellerfeder 24 in Wirkverbindung. Im Gegensatz dazu ist in diesem Beispiel der Lagerinnenring des Betätigungslagers 17 so gestaltet, dass dieser eine Wirkverbindung mit der Hebelfeder 25 eingehen kann. Die Betätigung des Betätigungslagers 17 erfolgt durch eine axiale Bewegung des im Gehäuse des Nehmerzylinders 15 gelagerten Kolbens, der hydraulisch mit einer Druckkraft beaufschlagbar ist.

Wird jedoch die Doppelkupplung 1 aus zwei Teilkupplungen aufgebaut, die die gleiche Betätigungsrichtung aufweisen, wie z.B. bei der Kombination einer aufgezogenen und einer zugedrückten Kupplung, dann wird aufgrund der geänderten Betätigungsrichtung aus der im Zentrum der Getriebeeingangswellen 28, 29 gelagerten Zugstange 19 eine Druckstange.

Die Lagerung der Doppelkupplung 1 basiert auf dem Festlager-Loslager-Prinzip. Hierbei wird das Festlager 14 durch ein in den Kupplungsdeckel 4 eingesetztes Lager gebildet, das an der Seite zum Getriebe 12 angeordnet ist. Über dieses Lager 14 ist die Doppelkupplung 1 mit dem Getriebe 12 fest verbunden. Somit kann die Kraftübertragung sowohl in radialer als auch in axialer Richtung erfolgen. Da die Richtung der Betätigung beider Teilkupplungen 2, 3 der Doppelkupplung 1 jeweils entgegengesetzt erfolgt, muss das Festlager 14 so ausgewählt werden, das dieses Axialkräfte in beiden Richtungen übertragen kann. Die Richtung der Axialkräfte, die das Festlager 14 übertragen muss ist vom jeweiligen Betriebszustand der Doppelkupplung 1 abhängig. Die Änderungen der Belastungsrichtung stellen dabei hohe Anforderungen an das Festlager 14. Aus diesem Grunde kommen vorzugsweise Rillenkugellager mit Vierpunktschliff, Vierpunktlager oder zweireihige Schrägkugellager zum Einsatz.

Wie bereits erwähnt, wird das Loslager 20 für die Doppelkupplung 1 durch die Lagerung des Kupplungsdeckels 5 auf dem Ausgangsteil 33 des externen Dämpfers 9 gebildet. Zwischen dem Ausgangsteil 33 und dem Eingangsteil 32 des Dämpfers 9 befindet sich ein Gleit- oder Wälzlager 37, wodurch die Doppelkupplung 1 über den Dämpfer 9 auf der Kurbelwelle 10 abgestützt werden kann. Der gewünschte axiale Freiheitsgrad dieser Lagerung 20 entsteht durch die an dieser Stelle ausgebildete Steckverzahnung. Allerdings kann auf diese Lagerstelle für die Doppelkupplung 1 verzichtet werden, indem das Ausgangsteil 33 nicht auf dem Eingangsteil 32, sondern lediglich über die Steckverzahnung gelagert wird. Somit ist die Doppelkupplung 1 nur noch über das Festlager 14 gelagert, wodurch der Achsversatz in radialer Richtung zwischen der Kurbelwelle 10 und dem Festlager 14 ausgeglichen werden kann.

Wie aus den Figuren 1 und 2 ersichtlich, stützt sich zur Verringerung des axialen Bauraumes das Festlager 14 über einen Verbindungsflansch 30 auf dem Gehäuse eines konzentrisch um die Getriebeeingangswelle 29 angeordneten Nehmerzylinders 15 ab. Über diesen Verbindungsflansch 30 ist mittels Schraubverbindungen 13 eine feste Verbindung zum nachfolgenden Getriebe 12 herstellbar. Auf diese Weise findet eine Entkoppelung der von der Kurbelwelle 10 herrührenden Schwingungen statt, die demzufolge zwar auf das Gehäuse des Getriebes 12, nicht jedoch auf die Getriebeeingangswellen 28, 29 übertragen werden. Denkbar wäre auch, den mit dem Festlager 14 in Verbindung stehenden Teilbereich des Verbindungsflansches 30 als Innenring des Festlagers auszubilden, so dass ein zusätzlicher Lagerinnenring entfallen könnte. Eine weitere Möglichkeit wäre, das Gehäuse des Nehmerzylinders 15 für die Lagerung der Doppelkupplung 1 zu nutzen, indem direkt das Gehäuse des Nehmerzylinders 15 als Abstützung für das Festlager 14 dient.

Um die Doppelkupplung 1, wie oben beschrieben, an dem Getriebe 12 befestigen zu können, muss die Verbindungsstelle (z.B. Verschraubung) 13 zwischen dem in diesem Beispiel als Flansch 30 ausgebildeten Befestigungselement und dem Getriebe 12 für die Montage zugänglich sein. Dieser Zugang, der durch Aussparungen in den Kupplungsteilen realisierbar ist, kann in radialer oder axialer Weise erfolgen. Um einen radialen Zugang zu ermöglichen, kann die mindestens eine Verbindungsstelle 13 auf einem Teilkreis angeordnet werden, der größer ist als der Außendurchmesser der Doppelkupplung 1. Eine platzsparendere Variante besteht aber darin, dass mindestens eine Befestigungsstelle 13 auf einem kleineren Teilkreisdurchmesser liegt. Diese Zugänglichkeit durch die gesamte Doppelkupplung 1 kann gewährleistet werden, indem die Aussparungen in den einzelnen, die Verbindung verdeckenden Bauteilen vorgesehen sind, die zumindest zeitweise bzw. in gewissen Betriebszuständen übereinander liegen. Eine weitere zweckmäßige Variante, die axiale Zugänglichkeit zu mindestens einer Verbindungsstelle zu gewährleisten, besteht darin, dass die Doppelkupplung 1 nicht als fertig montierte Einheit mit dem Getriebe 12 verbunden wird, sondern als ein aus Unterbaugruppen bestehendes Set schrittweise mit dem Getriebe 12 verbunden wird.

Die Montage der Doppelkupplung 1 erfolgt folgendermaßen:
Zunächst wird die Betätigungseinrichtung 15 am Gehäuse des Getriebes 12 fixiert. Dieser Montageschritt kann jedoch entfallen, wenn die Betätigungseinrichtung 15 bereits vorab mit Teilen der Doppelkupplung 1 verbunden wird. Danach wird die erste Unterbaugruppe in das Kupplungsgehäuse eingefügt. Diese erste Unterbaugruppe setzt sich im Wesentlichen aus dem Lager 14, dem Kupplungsdeckel 4, dem Betätigungshebel 25 und der Anpressplatte 6 zusammen. Anschließend wird der Kupplungsdeckel 4 mit dem Getriebe 12 verbunden. Die Zugänglichkeit zu den Verbindungsstellen kann durch Aussparungen im Deckel 4 und zwischen den Betätigungshebeln 25 ermöglicht werden.

Anschließend wird die Kupplungsscheibe 27 auf die Getriebeeingangswelle 29 aufgesteckt.

Danach wird die zweite Unterbaugruppe auf die bereits montierten Kupplungskomponenten aufgesetzt. Diese Unterbaugruppe besteht im Wesentlichen aus den zwischen Schwungmasse 8 und der Steckverzahnung 20 angeordneten Bauteilen. Anschließend wird diese Unterbaugruppe mit dem Kupplungsdeckel 4, beispielsweise mittels Verschraubung, verbunden. Danach wird das Betätigungslager 16 an der Betätigungsstange 19 fixiert. Nun wird der Externe Dämpfer 9 mit der Kurbelwelle 10 des nicht dargestellten Antriebsmotors verschraubt.

Abschließend wird sowohl der Antriebsmotor als auch das Getriebe 12 mit der Doppelkupplung 1 zusammengefügt und mit dieser verbunden.

Beim Zusammenfügen beider Aggregate wird das mit einer Steckverzahnung 20 versehene Ausgangsteil 33 des Dämpfers 9 mit dessen Eingangsteil 32 in Wirkverbindung gebracht.

Müssen aus konstruktiven Gründen die Betätigungseinrichtungen beider Teilkupplungen 2, 3 in der Kupplungsglocke angeordnet werden, wird die Betätigungsstange 19 aus Figur 1 durch ein feststehendes Rohr ersetzt und die Betätigungseinrichtung 36 für die erste Teilkupplung 2 zwischen diesem Rohr 19 und dem Betätigungslager 16 angeordnet, wie dies aus Figur 2 hervorgeht. Der übrige Aufbau dieser in Figur 2 dargestellten Doppelkupplung 1 ist der gleiche wie in Figur 1.

Um eine Entlüftung der Betätigungseinrichtung 36 auch dann durchführen zu können, wenn der Antrieb mit dem Getriebe 12 bereits verbunden ist, muss eine separate Leitung 38 zwischen der Betätigungseinrichtung 36 und einem Endlüftungsventil 37 eingeführt werden. Dies wird z.B. durch ein dünnes Rohr oder einen kleinen Kunststoffschlauch im Inneren des Rohres 19 realisiert. Im Innern der Betätigungsstange 19 befinden sich somit sowohl die Hydraulikflüssigkeit als auch die zur Entlüftung dienende Leitung 38. Diese Leitung 38 dient vor der Inbetriebnahme der Betätigungseinrichtung 36, die in diesem Stadium entlüftet werden muss, als Rückleitung. Durch diese konstruktive Lösung kann die Betätigungseinrichtung 36 "durchgespült" werden.

Im Normalbetrieb der Betätigungseinrichtung 36 wird die Leitung 38 durch ein spezielles Entlüftungsventil der eigentlichen Hydraulikleitung, die somit zwischen dem Innenmantel des Rohres 19 und dem Außenmantel der Leitung 38 gebildet wird, parallel geschaltet. Da die Entlüftung der Betätigungseinrichtung 36 bei geringem Hydraulikdruck erfolgt, muss die beispielsweise aus einem Schlauch gebildete Leitung 38 nicht druckstabil ausgeführt sein. Im Normalbetrieb der Betätigungseinrichtung 36, bei dem hohe Drücke auftreten, wird diese Leitung 38 von innen und von außen mit dem gleichen Druck beaufschlagt.

### Bezugszeichenliste

- 1: Doppelkupplung
- 2: Kupplung 1 (gezogene Kupplung)
- 3: Kupplung 2 (gedrückte Kupplung)
- 4: Kupplungsdeckel
- 5: Kupplungsdeckel
- 6: Druckplatte
- 7: Druckplatte
- 8: Zwischendruckplatte / Schwungmasse
- 9: externer Dämpfer
- 10: Kurbelwelle
- 11: Schraubverbindung
- 12: Getriebe
- 13: Schraubverbindung
- 14: Festlager
- 15: konzentrische um die Getriebeeingangswelle angeordneter Nehmerzylinder / Betä- tigungseinrichtung
- 16: Betätigungslager / Ausrücklager für Kupplung 1
- 17: Betätigungslager / Ausrücklager für Kupplung 2
- 18: Mutter
- 19: Zugstange / Druckstange / Betätigungsstange / Rohr
- 20: Loslager / Steckverzahnung
- 21: Schraubverbindung
- 22: Schraubverbindung
- 23: Anlasserzahnkranz
- 24: Tellerfeder / Betätigungshebel
- 25: Hebelfeder / Betätigungshebel
- 26: erste Kupplungsscheibe
- 27: zweite Kupplungsscheibe
- 28: erste Getriebeeingangswelle
- 29: zweite Getriebeeingangswelle
- 30: Verbindungsflansch
- 31: Verschleißnachstellung
- 32: Eingangsteil
- 33: Ausgangsteil
- 34: Sensorfeder
- 35: Verbindungselement / Stufenbolzen
- 36: Betätigungseinrichtung
- 37: Gleitlager
- 38: Leitung

## Patentansprüche

1. Doppelkupplung (1) mit zwei, mit Kupplungsdeckeln (4, 5) versehenen Teilkupplungen (2, 3) und einem zwischen Antrieb eines Kraftfahrzeuges und Doppelkupplung angeordnetem Dämpfer,
wobei die Lagerung der Doppelkupplung zumindest aus einem Festlager (14) gebildet ist, das im getriebeseitigen Kupplungsdeckel (4) angeordnet ist,
wobei zwischen dem Getriebe (12) und dem Festlager (14) ein mit einer Lagerschale dieses Festlagers verbundener Verbindungsflansch (30) angeordnet ist, über den eine Verbindung zum Getriebe herstellbar ist, und der Verbindungsflansch (30) mit einer integrierten Lagerlaufbahn für das Festlager versehen ist,
wobei das Festlager (14) mit einem Lagerdeckel am getriebeseitigen Kupplungsdeckel (4) befestigt ist,
wobei die Teilkupplungen (2,3) mittels Betätigungseinrichtungen betätigbar sind, und Betätigungslager (16,17) der Betätigungseinrichtungen mit Betätigungshebeln (24,25) der Teilkupplungen in Wirkverbindung stehen, **dadurch gekennzeichnet, dass**
eine Richtung der Betätigung beider Teilkupplungen (2,3) der Doppelkupplung jeweils entgegengesetzt erfolgt, und das Festlager (14) so ausgewählt ist, dass dieses Axialkräfte in beiden Richtungen übertagen kann.

2. Doppelkupplung (1) nach Anspruch 1, **dadurch gekennzeichnet, dass** in der Getriebeeingangswelle (28) eine Betätigungsstange (19) angeordnet ist, die als Druck- oder Zugstange ausgebildet sein kann.

3. Doppelkupplung (1) nach Anspruch 2, **dadurch gekennzeichnet, dass** das Betätigungslager (16) für die erste Teilkupplung (2) am Ende der Betätigungsstange (19) aufgebracht ist und die Betätigung dieses Betätigungslagers (16) über die Betätigungsstange (19) erfolgt.

4. Doppelkupplung (1) nach Anspruch 1 oder 2, **dadurch gekennzeichnet, dass** für die erste Teilkupplung (2) eine aufgedrückte Kupplung mit Verschleißnachstellung (31) und für die zweite Teilkupplung (3) eine zugedrückte Kupplung verwendet wird, und die Teilkupplungen (2, 3) mittels Betätigungseinrichtungen (15, 36) betätigt werden, wobei deren Betätigungslager (16, 17) mit Betätigungshebeln (24, 25) der Teilkupplungen (2, 3) in Wirkverbindung stehenden, und die Lagerung der Doppelkupplung (1) aus einem Loslager (20) und dem Festlager (14) gebildet wird, wobei das Loslager (20) durch eine Steckverzahnung des antriebsseitigen Kupplungsdeckels (5) mit dem Ausgangsteil (33) des Dämpfers (9) und das Festlager (14) durch ein im getriebeseitigen Kupplungsdeckel (4) angeordnetes Lager gebildet wird, das sich auf einer Getriebeeingangswelle (28, 29) abstützt, in der eine Betätigungsstange (19) angeordnet ist, und dass die Betätigungseinrichtung (36) für das Betätigungslager (16) direkt mit diesem wirkverbunden endseitig konzentrisch um die Betätigungsstange (19) angeordnet ist.

5. Doppelkupplung (1) nach Anspruch 4, **dadurch gekennzeichnet, dass** die Betätigungsstange (19) als Hohlstange bzw. Rohr ausgebildet und gegenüber dem Getriebe (12) fixiert ist.

6. Doppelkupplung (1) nach einem der vorhergehenden Ansprüche, **dadurch gekennzeichnet, dass** die Verschleißnachstellung (31) aus einer mit der ersten oder zweiter Teilkupplung (2 oder 3) in Wirkverbindung stehenden Sensorfeder (34) gebildet ist, wobei die Sensorfeder (34) zwischen Kupplungsdeckel (5) und Betätigungshebel (24) angeordnet ist und sich direkt oder indirekt am Kupplungsdeckel (5) abstützt.

7. Doppelkupplung (1) nach Anspruch 6, **dadurch gekennzeichnet, dass** die Sensorfeder (34) mittels mindestens einem Verbindungselement (35) mit dem Betätigungshebel (24) verbunden ist.

8. Doppelkupplung (1) nach Anspruch 7, **dadurch gekennzeichnet, dass** die Verbindungselemente (35) auf einem Umfang verteilt angeordnet sind.

9. Doppelkupplung (1) nach Anspruch 7, **dadurch gekennzeichnet, dass** das Verbindungselement (35) mindestens an einem Ende eine Bajonettverbindungsmöglichkeit aufweist.

## Claims

1. Double clutch (1) having two component clutches (2, 3) which are provided with clutch covers (4, 5) and having a damper arranged between a drive of a motor vehicle and the double clutch,
wherein the bearing arrangement of the double clutch is formed at least from a fixed bearing (14) which is arranged in the transmission-side clutch cover (4),
wherein between the transmission (12) and the fixed bearing (14) there is arranged a connecting flange (30) which is connected to a bearing shell of said fixed bearing and via which a connection to the transmission can be produced, and the connecting flange (30) is provided with an integrated bearing raceway for the fixed bearing,
wherein the fixed bearing (14) is fastened with a bearing cover to the transmission-side clutch cover (4),
wherein the component clutches (2, 3) can be actuated by means of actuation units, and actuation bearings (16, 17) of the actuation units are operatively connected to actuation levers (24, 25) of the component clutches, **characterized in that**
the actuation of the two component clutches (2, 3) of the double clutch takes place in each case in opposite directions, and the fixed bearing (14) is selected such that it can transmit axial forces in both directions.

2. Double clutch (1) according to Claim 1, **characterized in that** in the transmission input shaft (28) there is arranged an actuation rod (19) which may be in the form of a push rod or a pull rod.

3. Double clutch (1) according to Claim 2, **characterized in that** the actuation bearing (16) for the first component clutch (2) is attached to the end of the actuation rod (19), and the actuation of said actuation bearing (16) takes place via the actuation rod (19).

4. Double clutch (1) according to Claim 1 or 2, **characterized in that** a normally-closed clutch with wear readjustment means (31) is used for the first component clutch (2) and a normally-open clutch is used for the second component clutch (3), and the component clutches (2, 3) are actuated by means of actuation units (15, 36), wherein the actuation bearings (16, 17) thereof are operatively connected to actuation levers (24, 25) of the component clutches (2, 3), and the bearing arrangement of the double clutch (1) is formed from a floating bearing (20) and the fixed bearing (14), wherein the floating bearing (20) is formed by a spline-type gearing connection of the drive-side clutch cover (5) to the output part (33) of the damper (9) and the fixed bearing (14) is formed by a bearing which is arranged in the transmission-side clutch cover (4) and which is supported on a transmission input shaft (28, 29) in which an actuation rod (19) is arranged, and **in that** the actuation unit (36) for the actuation bearing (16) is arranged, so as to be directly operatively connected to the latter, on the end of and concentrically around the actuation rod (19).

5. Double clutch (1) according to Claim 4, **characterized in that** the actuation rod (19) is in the form of a hollow rod or tube and is fixed with respect to the transmission (12).

6. Double clutch (1) according to one of the preceding claims, **characterized in that** the wear readjustment means (31) is formed from a sensor spring (34) which is operatively connected to the first or second component clutch (2 or 3), wherein the sensor spring (34) is arranged between the clutch cover (5) and actuation lever (24) and is supported directly or indirectly on the clutch cover (5).

7. Double clutch (1) according to Claim 6, **characterized in that** the sensor spring (34) is connected to the actuation lever (24) by means of at least one connecting element (35).

8. Double clutch (1) according to Claim 7, **characterized in that** the connecting elements (35) are arranged so as to be distributed about a circumference.

9. Double clutch (1) according to Claim 7, **characterized in that** the connecting element (35) has a bayonet connection facility at least on one end.

## Revendications

1. Embrayage double (1) comportant deux embrayages partiels (2, 3) munis de couvercles d'embrayage (4, 5) et un amortisseur disposé entre l'entraînement d'un véhicule automobile et l'embrayage double, dans lequel l'appui de l'embrayage double est formé au moins par un palier fixe (14), qui est disposé dans le couvercle d'embrayage (4) côté boîte de vitesses, dans lequel une bride d'assemblage (30) reliée à une coquille de palier de ce palier fixe est disposée entre la boîte de vitesses (12) et le palier fixe (14), au moyen de laquelle une liaison avec la boîte de vitesses peut être établie, et la bride de liaison (30) est munie d'une piste de roulement intégrée pour le palier fixe, dans lequel le palier fixe (14) est fixé au couvercle d'embrayage (4) côté boîte de vitesses au moyen d'un couvercle de palier, dans lequel les embrayages partiels (2, 3) peuvent être actionnés par des dispositifs d'actionnement, et des paliers d'actionnement (16, 17) des dispositifs d'actionnement sont en liaison active avec des leviers d'actionnement (24, 25) des embrayages partiels, **caractérisé en ce qu'**une direction d'actionnement des deux embrayages partiels (2, 3) de l'embrayage double se produit chaque fois en sens contraire et **en ce que** le palier fixe (14) est choisi de telle manière que celui-ci puisse transmettre des efforts axiaux dans les deux directions.

2. Embrayage double (1) selon la revendication 1, **caractérisé en ce qu'**une tige de commande (19) est disposée dans l'arbre d'entrée de boîte de vitesses (28), et peut être configurée comme tige de poussée ou comme tige de traction.

3. Embrayage double (1) selon la revendication 2, **caractérisé en ce que** le palier d'actionnement (16) pour le premier embrayage partiel (2) est installé à l'extrémité de la tige d'actionnement (19) et l'actionnement de ce palier d'actionnement (16) est effectué au moyen de la tige d'actionnement (19).

4. Embrayage double (1) selon la revendication 1 ou 2, **caractérisé en ce que** l'on utilise pour le premier embrayage partiel (2) un embrayage ouvert en poussant avec rattrapage d'usure (31) et pour le deuxième embrayage partiel (3) un embrayage fermé en poussant, et les embrayages partiels (2, 3) sont actionnés au moyen de dispositifs d'actionnement (15, 36), dans lequel leurs paliers d'actionnement (16, 17) sont en liaison active avec des leviers d'actionnement (24, 25) des embrayages partiels (2, 3) et l'appui de l'embrayage double (1) est formé d'un palier libre (20) et du palier fixe (14), dans lequel le palier libre (20) est formé par une denture d'emboîtement du couvercle d'embrayage (5) côté entraînement avec la pièce de sortie (33) de l'amortisseur (9) et le palier fixe (14) est formé par un palier disposé dans le couvercle d'embrayage (4) côté boîte de vitesses, qui s'appuie sur un arbre d'entrée de boîte de vitesses (28, 29), dans lequel la tige d'actionnement (19) est disposée, et **en ce que** le dispositif d'actionnement (36) pour le palier d'actionnement (16), en liaison active directe avec celui-ci, est disposé côté extrémité de façon concentrique autour de la tige d'actionnement (19).

5. Embrayage double (1) selon la revendication (4), **caractérisé en ce que** la tige d'actionnement (19) est réalisée sous la forme d'une tige creuse ou d'un tube et est fixée par rapport à la boîte de vitesses (12).

6. Embrayage double (1) selon l'une quelconque des revendications précédentes, **caractérisé en ce que** le rattrapage d'usure (31) est formé d'un ressort de détecteur (34) en liaison active avec le premier ou le deuxième embrayage partiel (2 ou 3), dans lequel le ressort de détecteur (34) est disposé entre un couvercle d'embrayage (5) et un levier d'actionnement (24) et s'appuie directement ou indirectement sur le couvercle d'embrayage (5).

7. Embrayage double (1) selon la revendication 6, **caractérisé en ce que** le ressort de détecteur (34) est relié au levier d'actionnement (24) au moyen d'au moins un élément de liaison (35).

8. Embrayage double (1) selon la revendication 7, **caractérisé en ce que** les éléments de liaison (35) sont disposés de façon répartie sur une périphérie.

9. Embrayage double (1) selon la revendication 7, **caractérisé en ce que** l'élément de liaison (35) présente une possibilité d'assemblage à baïonnette au moins à une extrémité.
